# EUROPÄISCHE PATENTSCHRIFT

(11) **EP 1 197 004 B1**
(45) Veröffentlichungstag und Bekanntmachung des Hinweises auf die Patenterteilung: **06.10.2004**
(21) Anmeldenummer: 00954362.0
(22) Anmeldetag: 21.07.2000
(51) Int. Cl.: H04B 1/40, H04Q 7/32

(54) **MOBILES TELEKOMMUNIKATIONSENDGERÄT**
MOBILE TELECOMMUNICATION TERMINAL
TERMINAL DE TELECOMMUNICATION MOBILE

(30) Priorität: 21.07.1999 DE 19934252
(43) Veröffentlichungstag der Anmeldung: 17.04.2002
(73) Patentinhaber: SIEMENS AKTIENGESELLSCHAFT, 80333 München (DE)
(72) Erfinder: IMHOF, Markus, D-46397 Bocholt (DE)
(86) Internationale Anmeldenummer: PCT/DE2000/002393
(87) Internationale Veröffentlichungsnummer: WO 2001/008317

(56) Entgegenhaltungen:
- WO-A-99/31812
- DE-A- 19 704 907
- US-A- 5 553 117

## Beschreibung

Die vorliegende Erfindung betrifft ein Endgerät für die Telekommunikation über Vermittlungsstellen in einem Mobilfunknetz wie etwa dem bekannten GSM-Netz oder dem in Entwicklung befindlichen UMTS- oder UTRA-Standard.

Um die Flexibilität derartiger mobiler Endgeräte zu verbessern und ihren Betrieb für die Benutzer preiswerter zu machen, ist bereits ein kombiniertes Endgerät vorgeschlagen worden, das einem Benutzer wahlweise die Kommunikation im GSM-Mobilfunknetz oder nach DECT-Standard ermöglicht. Dieses Endgerät kann zum Beispiel außer Haus in herkömmlicher Weise für die Kommunikation im GSM-Netz und in der Umgebung einer DECT-Basisstation für die Kommunikation über diese Basisstation eingesetzt werden. Dies erlaubt es dem Benutzer des Endgeräts, solange er sich in Reichweite der DECT-Basisstation befindet, Gespräche mit anderen an die gleiche Basisstation angeschlossenen Endgeräten gebührenfrei zu führen oder Gespräche mit auswärtigen Teilnehmern ebenfalls über die Basisstation zu führen, wobei für solche Gespräche nur die im Vergleich zu den Kosten im Mobilfunknetz in der Regel geringeren Festnetzgebühren anfallen. Ein Nachteil dieses bekannten Endgeräts ist, daß eine gebührenfreie Kommunikation immer nur innerhalb der Reichweite der DECT-Basisstation möglich ist. So können zwei Benutzer dieser bekannten kombinierten Endgeräte nicht gebührenfrei kommunizieren, wenn sie sich außer Reichweite ihrer Basisstation befinden, selbst wenn der Abstand zwischen ihnen so klein ist, daß im Prinzip ein Endgerät Funksignale des anderen empfangen könnte.

Dazu sind aus der WO 98/35515 Multi-Mode-Mobilfunktelefone bekannt, die eine Schaltung zur Realisierung einer ersten Betriebsart zur Kommunikation mit einem Mobilfunknetz und eine Schaltung zur Realisierung einer zweiten Betriebsart zur Kommunikation mit weiteren Multi-Mode-Mobilfunktelefonen ohne Beteiligung des Mobilfunknetzes aufweisen.

Um diesen Nachteil zu beheben, wird gemäß der vorliegenden Erfindung vorgeschlagen, ein Endgerät für die Telekommunikation über Vermittlungsstellen in einem Mobilfunknetz für netzgebundene Nachrichtenübertragung zusätzlich mit einem Sende- und/oder Empfangsteil für die netzfreie Nachrichtenübertragung in einem frei verfügbaren Frequenzbereich auszustatten. Vorzugsweise sollten der frei verfügbare Frequenzbereich und das Frequenzband für die netzgebundene Nachrichtenübertragung benachbart sein, so daß eine einheitliche:Antenne mit guten Sende-/Empfangseigenschaften für beide Frequenzbereiche am Endgerät verwendet werden kann. So kann zum Beispiel das Mobilfunknetz ein UMTS-Netz mit einem Frequenzband bei 2 GHz und der frei verfügbare Frequenzbereich ein ISM-Band bei 2,4 GHz sein.

Ein solches Endgerät läßt sich mit minimalen Entwicklungskosten bereitstellen, wenn es ein Sende-Empfangsteil für die Nachrichtenübertragung in dem Mobilfunknetz umfaßt, das von dem Sende- und/oder Empfangsteil für die netzfreie Nachrichtenübertragung getrennt ist. Um Kosten, Energieverbrauch und Gewicht des Endgeräts zu sperren, ist es allerdings zweckmäßig, Schaltungskomponenten so weit wie möglich für das Mobilfunknetz-Sende-/Empfangsteil und das netzfreie Sendeund/oder Empfangsteil gemeinsam zu nutzen. Zu diesem Zweck können vorzugsweise Oszillatoren und/oder Filter abstellbar ausgelegt sein.

Das Endgerät kann einen oder mehrere Betriebszustände für die Nachrichtenübertragung in dem frei verfügbaren Frequenzbereich aufweisen. Eine davon kann zum Beispiel eine ungeschützte Mehrteilnehmerverbindung unterstützen. In diesem Betriebszustand hat das Endgerät sämtliche Funktionalitäten eines Mobilfunkgeräts wie etwa eines CB-Funkgeräts.

Alternativ oder ergänzend kann ein Codierer und/oder Decodierer zum Codieren/Decodieren eines im frei verfügbaren Frequenzbereich zu sendenden/empfangenden Nachrichtensignals vorgesehen werden. Dieser Codierer beziehungsweise Decodierer arbeitet vorzugsweise nach einem CDMA-Verfahren. Eine solche Codierung erlaubt es, die Teilnahme an einem in dem frei verfügbaren Frequenzbereich stattfindenden Gespräch auf solche Teilnehmer zu beschränken, die mit entsprechenden Codierern ausgestattete Endgeräte besitzen, die obendrein gleiche Codes verwenden.

Dabei kann der zu verwendende Code durch den - zumindest einmaligen - Austausch eines Schlüssels zwischen dem Endgerät und einem Partnerendgerät festgelegt werden. Dritte Endgeräte, die den ausgetauschten Schlüssel nicht mit empfangen haben, können somit zumindest nur unter Schwierigkeiten in ein laufendes Gespräch eindringen. Eine weitere Möglichkeit ist, daß ein Schlüssel für die Codierung/Decodierung durch einen Benutzer einstellbar ist. So können zwei Benutzer auf einem sicheren Weg, zum Beispiel durch vorherige Absprache, den Schlüssel festlegen, und eine Übertragung, die mitgehört werden könnte, ist nicht mehr erforderlich.

Es ist ferner vorteilhaft, wenn dem Endgerät eine Benutzerkennung für die Nachrichtenübertragung im frei verfügbaren Frequenzbereich zuordenbar ist, zum Beispiel durch Eintippen einer Kennung durch einen Benutzer und.Abspeichern der Kennung in einem Halbleiter-Speicherelement des Endgeräts, oder durch Einstecken einer Chipkarte in das Endgerät, auf der die Kennung gespeichert ist. Eine solche Kennung eines solchen Partner-Endgeräts kann vom Sendeteil für den Aufbau einer Verbindung im frei verfügbaren Frequenzbereich übertragen werden. Dementsprechend überwacht das Empfangsteil den frei verfügbaren Frequenzbereich auf die Übertragung der zugeordneten Benutzerkennung und erzeugt ein Aufmerksamtkeitssignal für die Benutzer, wenn die Übertragung der Benutzerkennung erkannt wird, um so den Benutzer davon in Kenntnis zu setzen, daß ein Gesprächspartner ihn zu erreichen versucht.

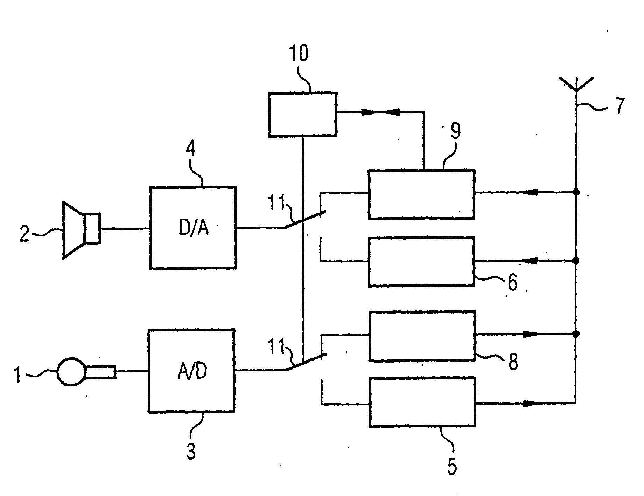

Die Figur zeigt ein schematisches Blockdiagramm eines erfindungsgemäßen Endgeräts. Es umfaßt in an sich bekannter Weise Mikrophon 1 und Lautsprecher 2, einen Analogdigitalwandler 3 für die Digitalisierung des vom Mikrophon aufgefangenen Sprachsignals, einen Digitalanalogwandler 4, der den Lautsprecher mit einem Ausgabesignal versorgt, Sende- und Empfangsteil 5, 6 nach UMTS-Norm sowie eine Antenne 7. Die Arbeitsweise dieser Komponenten ist bekannt und braucht nicht eingehend behandelt zu werden.

Zwischen den Wandlern 3, 4 und der Antenne 7 sind jeweils parallel zu UMTS-Sende- und -empfangsteil Sende- und Empfangsteil 8, 9 für das ISM-Band bei 2,4 GHz angeordnet. Eine Steuereinheit 10 kontrolliert die Stellung von zwei Schaltern 11, die jeweils zwischen DA-Wandler und Empfangsteilen 6, 9 beziehungsweise zwischen AD-Wandler und Sendeteilen 5, 8 angeordnet sind, und die Wandler jeweils selektiv mit einem der zwei Sendeteile beziehungsweise Empfangsteile verbinden. Ein Benutzer des Endgeräts kann durch Drücken von Tasten eines herkömmlichen, nicht dargestellten Tastenblocks des Endgeräts die Stellung der Schalter 11 bestimmen und so festlegen, ob das Endgerät in einem UMTS-Betriebszustand, in dem es sich wie ein herkömmliches UMTS-Endgerät verhält, oder einem ISM-Betriebszustand arbeiten soll.

Der ISM-Betriebszustand umfaßt mehrere Varianten. Bei einer ersten Variante wird das Sprachsignal des Benutzers ungeschützt auf einem Kanal des ISM-Frequenzbereichs ausgestrahlt und kann so von jedem in Reichweite befindlichen ISM-Funkgerät aufgefangen und wiedergegeben werden.

Bei einer zweiten Variante ist vorgesehen, daß die vom AD-Wandler 3 gelieferten Sprachdaten vom Sendeteil 8 gemäß einem vorgegebenen Scramblingcode verwürfelt und/oder auf ein Spreizbandsignal aufmoduliert werden. Das Ausgangssignal des Sendeteils 8 ist dann nur noch für einen Empfänger verständlich, der die Form des Spreizbandsignals oder den Verwürfelungsalgorithmus kennt und die Operationen rückgängig machen kann, um ein verständliches Wiedergabesignal zu erhalten.

Zur Vorbereitung einer verwürfelten oder spektralgespreizten Übertragung kann vorgesehen sein, daß die Steuereinheit 10 zunächst ungeschützt die Aussendung einer Information über ein zu verwendendes Spreizbandsignal oder einen zu verwendenden Verwürfelungsalgorithmus veranlaßt, und daß sie und ein Empfänger die Benutzung eines solchen Algorithmus beziehungsweise Signals aufnehmen, sobald eine Bestätigung des Empfängerendgeräts über den Wolkenempfang dieser Information erhalten worden ist. Damit sind die Möglichkeiten eines Dritten, in eine bereits bestehende Gesprächsverbindung einzudringen, erheblich eingeschränkt.

Eine andere Möglichkeit ist die, einen Benutzer das zu verwendende Spreizbandsignal beziehungsweise den Verwürfelungsalgorithmus spezifizieren zu lassen, zum Beispiel durch Tasteneingabe oder Verwendung einer Chipkarte. Insbesondere die Verwendung von Chipkarten eröffnet die Möglichkeit, "geschlossene Benutzergruppen" im ISM-Band zu bilden, die sich jeweils durch die verwendeten Schutzmechanismen unterscheiden und untereinander diskret kommunizieren können.

Um das gezielte Anrufen eines bestimmten Teilnehmers im ISM-Band zu ermöglichen, ist jedem erfindungsgemäßen Endgerät beziehungsweise seinem Benutzer eine spezifische Kennung zugeordnet, die in einem Speicherelement des Endgeräts oder der oben erwähnten Chipkarte in einer Weise abgelegt ist, daß die Steuereinheit darauf zugreifen kann. Das Empfangsteil 9 überwacht die im ISM-Band von der Antenne 7 empfangenen Signale fortlaufend darauf, ob die eigene Benutzerkennung darin enthalten ist. Diese Aufgabe kann zum Beispiel dadurch erleichtert werden, daß für die Übertragung solcher Kennungen ein spezieller Kanal definiert wird, zum Beispiel durch Festlegen eines eng begrenzten Frequenzbereichs, eines Zeitfensters oder eines Codes, die für die Übertragung der Kennungen verwendet werden. Wenn das Empfangsteil 9 die eigene Kennung im Empfangssignal erfaßt, veranlaßt die Steuereinheit 10 die Ausgabe eines Aufmerksamkeitssignals, zum Beispiel eines herkömmlichen Läutesignals oder die Erzeugung einer mechanischen Schwingung, die den Benutzer des Endgeräts davon in Kenntnis setzt, daß ein Anrufer versucht, ihn zu erreichen. Dieses Aufmerksamkeitssignal kann bei einem Anruf im ISM-Band ein anderes sein als bei einem Anruf im Mobilfunknetz.

Auf diese Weise wird die Möglichkeit geschaffen, ohne Zwischenschaltung einer Vermittlungsstation wie etwa einer Basisstation eines Mobilfunknetzes oder einer DECT-Basisstation gezielte Gesprächsverbindungen zwischen einzelnen Teilnehmern aufzubauen. Zwei erfindungsgemäße Endgeräte können daher auch dann miteinander kommunizieren, wenn sie sich außerhalb der Reichweite einer solchen Vermittlungsstation befinden.

## Patentansprüche

1. Endgerät für die Telekommunikation über Vermittlungsstellen in einem Mobilfunknetz aufweisend ein zusätzliches Sendeund/oder Empfangsteil (8,9) für die netzfreie Nachrichtenübertragung in einem frei verfügbaren Frequenzbereich, **dadurch gekennzeichnet, daß** das Mobilfunknetz ein UMTS-Netz und der frei verfügbare Frequenzbereich ein ISM-Band, vorzugsweise das ISM-Band bei 2,4 GHz ist und wobei das Endgerät ein Sende-/Empfangsteil (5, 6) für die Nachrichtenübertragung in dem Mobilfunknetz umfaßt, das abstimmbare Oszillatoren und/oder Filter umfaßt, die gleichzeitig dem Sende- und/oder Empfangsteil (8, 9) für die netzfreie Nachrichtenübertragung angehören.

2. Endgerät nach einem der vorhergehenden Ansprüche, **dadurch gekennzeichnet, daß** es ein Sende-/Empfangsteil (5, 6) für die Nachrichtenübertragung in dem Mobilfunknetz umfaßt, das von dem Sende- und/oder Empfangsteil (8, 9) für die netzfreie Nachrichtenübertragung getrennt ist.

3. Endgerät nach einem der vorhergehenden Ansprüche, **dadurch gekennzeichnet, daß** es einen Betriebszustand aufweist, indem es eine ungeschützte Mehrteilnehmerverbindung im frei verfügbaren Frequenzbereich unterstützt.

4. Endgerät nach einem der vorhergehenden Ansprüche, **dadurch gekennzeichnet, daß** es einen Codierer und/oder Codierer zum Codieren/Decodieren eines im frei verfügbaren Frequenzbereich zu sendenden/empfangenden Nachrichtensignals, insbesondere nach einem CDMA-Verfahren, aufweist.

5. Endgerät nach Anspruch 3, **dadurch gekennzeichnet, daß** es zum Aufbau einer Verbindung im frei verfügbaren Frequenzbereich einen Schlüssel für die Codierung/Decodierung mit einem Partnerendgerät austauscht.

6. Endgerät nach Anspruch 3, **dadurch gekennzeichnet, daß** ein Schlüssel für die Codierung/Decodierung durch einen Benutzer einstellbar ist.

7. Endgerät nach einem der vorhergehenden Ansprüche, **dadurch gekennzeichnet, daß** ihm eine Benutzerkennung für die Nachrichtenübertragung im frei verfügbaren Frequenzbereich zuordenbar ist, und daß das Sendeteil (8) für den Aufbau einer Verbindung im frei verfügbaren Frequenzbereich die Benutzerkennung eines gewünschten Partnerendgeräts überträgt.

8. Endgerät nach einem der vorhergehenden Ansprüche, **dadurch gekennzeichnet, daß** ihm eine Benutzerkennung für die Nachrichtenübertragung im frei verfügbaren Frequenzbereich zuordenbar ist, und daß das Empfangsteil (9) den frei verfügbaren Frequenzbereich auf die Übertragung der zugeordneten Benutzerkennung überwacht und ein Aufmerksamkeitssignal für den Benutzer erzeugt, wenn die Übertragung der Benutzerkennung erkannt wird.

## Claims

1. Terminal for telecommunication via switching centres in a mobile radio network having an additional transmitter and/or a receiver part (8, 9) for network-free message transmission in a freely available frequency range, **characterized in that** the mobile radio network is a UMTS network and the freely available frequency range is an ISM band, preferably the ISM band at 2.4 GHz, and the terminal comprising a transceiver part (5, 6) for message transmission in the mobile radio network which comprises tunable oscillators and/or filters which belong at the same time to the transmitter and/or receiver part (8, 9) for network-free message transmission.

2. Terminal according to one of the preceding claims, **characterized in that** it comprises a transceiver part (5, 6) for message transmission in the mobile radio network which is separate from the transmitter and/or receiver part (8, 9) for network-free message transmission.

3. Terminal according to one of the preceding claims, **characterized in that** it has an operating state **in that** it supports an unprotected multi-subscriber connection in the freely available frequency range.

4. Terminal according to one of the preceding claims, **characterized in that** it has an encoder and/or decoder for encoding/decoding a message signal to be transmitted/received in the freely available frequency range, in particular on the basis of a CDMA process.

5. Terminal according to Claim 3, **characterized in that** it exchanges a key for the encoding/decoding with a partner terminal for setting up a connection in the freely available frequency range.

6. Terminal according to Claim 3, **characterized in that** a key for the encoding/decoding can be set by a user.

7. Terminal according to one of the preceding claims, **characterized in that** it can be assigned a user identification for the message transmission in the freely available frequency range, and **in that** the transmitter part (8) transmits the user identification of a desired partner terminal for the setting up of a connection in the freely available frequency range.

8. Terminal according to one of the preceding claims, **characterized in that** it can be assigned a user identification for the message transmission in the freely available frequency range, and **in that** the receiver part (9) monitors the freely available frequency range for the transmission of the assigned user identification and generates a warning signal for the user if the transmission of the user identification is detected.

## Revendications

1. Terminal pour la télécommunication par le biais de centres de commutation dans un réseau de radiotéléphonie mobile, comprenant une partie d'émission et/ou réception supplémentaire (8, 9) pour la transmission de messages sans réseau dans une gamme de fréquences librement disponible, **caractérisé en ce que** le réseau de radiotéléphonie mobile est un réseau UMTS et la gamme de fréquences librement disponible est une bande ISM, de préférence la bande ISM des 2,4 GHz, et le terminal comprenant une partie d'émission/réception (5, 6) pour la transmission de messages dans le réseau de radiotéléphonie mobile, laquelle partie d'émission/réception comprend des oscillateurs et/ou filtres réglables qui appartiennent, en même temps, à la partie d'émission et/ou réception (8, 9) pour la transmission de messages sans réseau.

2. Terminal selon l'une des revendications précédentes, **caractérisé en ce qu'**il comprend une partie d'émission/réception (5, 6) pour la transmission de messages dans le réseau de radiotéléphonie mobile, laquelle partie d'émission/réception est séparée de la partie d'émission et/ou réception (8, 9) pour la transmission de messages sans réseau.

3. Terminal selon l'une des revendications précédentes, **caractérisé en ce qu'**il présente un état de fonctionnement dans lequel il supporte une liaison multi-abonnés non protégée dans la gamme de fréquences librement disponible.

4. Terminal selon l'une des revendications précédentes, **caractérisé en ce qu'**il comprend un codeur et/ou codeur pour coder/décoder un signal de message devant être envoyé/reçu dans la gamme de fréquences librement disponible, notamment selon un procédé CDMA.

5. Terminal selon la revendication 3, **caractérisé en ce qu'**il échange une clé pour le codage/décodage avec un terminal partenaire en vue de l'établissement d'une liaison dans la gamme de fréquences librement disponible.

6. Terminal selon la revendication 3, **caractérisé en ce qu'**une clé pour le codage/décodage peut être mise au point par un utilisateur.

7. Terminal selon l'une des revendications précédentes, **caractérisé en ce qu'**un indicatif d'utilisateur pour la transmission de messages dans la gamme de fréquences librement disponible peut lui être alloué et **en ce que** la partie d'émission (8) transmet l'indicatif d'utilisateur d'un terminal partenaire souhaité pour l'établissement d'une liaison dans la gamme de fréquences librement disponible.

8. Terminal selon l'une des revendications précédentes, **caractérisé en ce qu'**un indicatif d'utilisateur pour la transmission de messages dans la gamme de fréquences librement disponible peut lui être alloué et **en ce que** la partie de réception (9) surveille la gamme de fréquences librement disponible pour détecter la transmission de l'indicatif d'utilisateur alloué et produit un signal d'avertissement pour l'utilisateur lorsque la transmission de l'indicatif d'utilisateur est détectée.
